# EUROPÄISCHE PATENTSCHRIFT

(11) **EP 3 172 494 B1**
(45) Veröffentlichungstag und Bekanntmachung des Hinweises auf die Patenterteilung: **12.02.2020**
(21) Anmeldenummer: 15738036.1
(22) Anmeldetag: 09.07.2015
(51) Int. Cl.: F24F 1/0003, H02J 1/06, H02J 1/00, G06F 1/26, F24F 1/00, H05K 7/20

(54) **VERFAHREN ZUM KÜHLEN UND ANORDNUNG AUS LUFTKONDITIONIERUNGSGERÄT UND WÄRMEERZEUGENDEN GERÄTEN**
METHOD OF COOLING AND ARRANGEMENT OF A COOLING DEVICE AND HEAT EMITTING COMPONENTS
PROCÉDÉ DE RÉFRIGÉRER ET ARRANGEMENT D'UN DISPOSITIF DE CONDITIONNEMENT D'AIR ET DES ÉLÉMENTS ÉMETTANTS LA CHALEUR

(30) Priorität: 23.07.2014 DE 102014110363
(43) Veröffentlichungstag der Anmeldung: 31.05.2017
(73) Patentinhaber: Weiss Klimatechnik GmbH, 35447 Reiskirchen-Lindenstruth (DE)
(72) Erfinder: KOESTER, Mathias, 61231 Bad Nauheim (DE); SALOMON, Peter, 74915 Waibstadt (DE)
(74) Vertreter: Stoffregen, Hans-Herbert
(86) Internationale Anmeldenummer: PCT/EP2015/065710
(87) Internationale Veröffentlichungsnummer: WO 2016/012255

(56) Entgegenhaltungen:
- EP-A2- 2 372 261
- DE-A1-102011 107 688
- DE-A1-102011 118 272
- US-A1- 2007 165 377
- US-A1- 2014 103 713

## Beschreibung

Die Erfindung bezieht sich auf ein Verfahren zum Kühlen von in einem Raum angeordneten wärmeerzeugenden Geräten, insbesondere IT-Geräten, nach dem Oberbegriff des Anspruchs 1 sowie auf eine Anordnung nach dem Oberbegriff des Anspruchs 5 zur Durchführung des Verfahrens.

Die DE 43 43 611 C2 betrifft eine Anordnung, umfassend ein Klimagerät, bei dem die elektrischen Komponenten in Form von Aktoren, Sensoren und Steuereinheiten als Wechselstromkomponenten ausgebildet sind. Diese können zwar mit Gleichstrom betrieben werden, wobei allerdings zwischen einer Gleichstromquelle und den Wechselstromkomponenten ein Gleichspannungswandler mit Gleichspannungs-Zwischenkreis und Wechselrichter vorgesehen ist.

Gemäß einem Artikel von Rene Mosbacher: "Mit Gleichstrom im Rechenzentrum sparen" besteht der Trend, die IT-Hardware eines Rechenzentrums mit Gleichstrom statt mit dem üblichen Wechselstrom zu betreiben, um Energie und somit Kosten zu sparen. Die IT-Hardware wird normalerweise mit 230 V Wechselstrom versorgt. Weil die elektronischen Bauteile aber Gleichstrom benötigen, muss der Wechselstrom in den Netzteilen der Geräte in Niederspannung gewandelt und gleichgerichtet werden. Bei jeder Umwandlung entstehen aber Verluste in Form von Wärme. Diese Wärme muss schließlich wieder von der Kühlung des Rechenzentrums abgeführt werden, was zusätzlich Energie verbraucht.

Die DE 10 2011 107 688 A1 betrifft ein Rechenzentrum mit mindestens einer aus mehreren Servern bestehenden Rechenanlage, mit einer Energieversorgungsanlage zur Hauptenergieversorgung des Rechenzentrums und mit einer Kühlanlage zur Kühlung der Rechenanlage. Dabei ist vorgesehen, dass die Energieversorgungsanlage mindestens einen Gleichspannungserzeuger aufweist, und dass ein Gleichspannungsnetz die mindestens eine Rechenanlage und die Energieversorgungsanlage verbindet. Die Kühlanlage ist als Sorptionskälteanlage ausgebildet, die über ein Abwärmeleitungssystem mit Abwärme der Energieversorgungsanlage versorgt wird.

Damit offenbart die DE 10 2011 107 688 A1 ein Verfahren zum Kühlen gemäß dem Oberbegriff von Anspruch 1 sowie eine Anordnung gemäß dem Oberbegriff von Anspruch 5.

Die DE 10 2011 118 272 A1 bezieht sich auf eine Klimatisierungsvorrichtung zum Temperieren von elektronischen Komponenten. Die Klimatisierungsvorrichtung ist als eine Schaltschrank-Klimatisierungseinrichtung mit einem quaderförmigen Gehäuse ausgebildet, wobei das quaderförmige Gehäuse als 19"-Einschubgehäuse ausgebildet ist.

Die Klimatisierungsvorrichtung weist einen gleichstromgespeisten Kompressor auf, sodass die Klimatisierungsvorrichtung unabhängig vom Netzstrom betrieben und beispielsweise mit Batterien oder Akkumulatoren mit Strom versorgt werden kann. Die Klimatisierungsvorrichtung wird mit einer 24 V DC Versorgung oder einer 48 V DC Versorgung betrieben.

Die US 2007/0165377 A1 betrifft ein System zur Kühlung eines Rechenzentrums mit einer Vielzahl von Kühlracks, wobei jedes Kühlrack ein Gehäuse mit Kühlsystemkomponenten umfasst.

Die US 2014/0103713 A1 bezieht sich auf ein Kühlsystem für Server mit AC- und DC-Spannungsquellen und ein Verfahren zum Betrieb eines solchen, wobei zusätzlich zu einer DC-Spannungsversorgung eine AC-Spannungsversorgung vorgesehen ist.

Die EP 2 372 261 A2 bezieht sich auf ein Klimagerät unter Verwendung von Photovoltaikenergie. Das Klimagerät umfasst eine Photovoltaikzelle zur Umwandlung von Photovoltaikenergie in Gleichspannung, einen inneren Wärmetauscher und einen äußeren Wärmetauscher. Die durch Photovoltaik erzeugte Energie versorgt den inneren Wärmetauscher und wird als zumindest eine Stand-by-Power in einem Stand-by-Modus verwendet.

Die CN 201310674418 bezieht sich auf ein Photovoltaik-Gleichstrom-Mikro-Gridsystem. Das System umfasst ein Hochspannungs-Gleichspannungs-Verteilungssystem, an dem mehrere Verbraucher über DC/DC-Wandler angeschlossen sind. Es wird auch die Verwendung einer 380VDC-Spannung zum direkten Betrieb eines Gleichspannungs-Klimagerätes vorgeschlagen.

Ein ähnliches Photovoltaik-Gleichstrom-Mikro-Gridsystem ist in der CN 103 618 372 A beschrieben.

Die CN 103 208 852 A bezieht sich auf das technische Gebiet eines Rechenzentrums und beschreibt eine umweltfreundliche Energieversorgungseinrichtung für ein solches.

Das IT-Equipment ist als Gleichstrom-Equipment ausgebildet. In diesem Zusammenhang wird auch die Verwendung eines Gleichspannungsklimatisierungsgerätes beschrieben.

Davon ausgehend liegt der vorliegenden Erfindung die Aufgabe zugrunde, ein Verfahren sowie eine Anordnung zum Kühlen von wärmeerzeugenden Geräten der eingangs genannten Art derart weiterzubilden, dass dessen Energieversorgung vereinfacht und der Energieverbrauch reduziert wird.

Die Aufgabe wird erfindungsgemäß durch ein Verfahren mit den Merkmalen des Anspruchs 1 gelöst.

Das erfindungsgemäße Verfahren zeichnet sich gegenüber dem Stand der Technik dadurch aus, dass als elektrische Betriebsmittel des Luftkonditionierungsgerätes Gleichspannungskomponenten verwendet werden, die unmittelbar mit derselben zum Betrieb der wärmeerzeugenden Geräte erforderlichen Versorgungsgleichspannung betrieben werden. Unmittelbar bedeutet dies, dass die elektrischen Betriebsmittel mit derselben Gleichspannungsquelle und derselben Gleichspannung betrieben werden, mit der auch die wärmeerzeugenden Geräte betrieben werden. Dadurch können Kosten für eine zusätzliche Wechselspannungsversorgung eingespart werden.

Eine bevorzugte Verfahrensweise zeichnet sich dadurch aus, dass insbesondere sämtliche der elektrischen Betriebsmittel des Luftkonditionierungsgerätes in Form von Niederspannungskomponenten wie der zumindest eine Antrieb für den Ventilator des Verdampfers, den Ventilator des Kondensators und/oder den Kompressor unmittelbar mit der Versorgungsgleichspannung betrieben werden. Dabei ist vorgesehen, dass als Betriebsmittel solche verwendet werden, die eine Nennspannung aufweisen, die der Versorgungsgleichspannung entspricht.

Eine weitere bevorzugte Verfahrensweise zeichnet sich dadurch aus, dass insbesondere sämtliche elektrische Betriebsmittel in Form von Kleinspannungskomponenten wie die zumindest eine Steuer-/Regeleinheit, der zumindest eine Aktor wie Stellantrieb und/oder der zumindest eine Sensor wie Temperatursensor über einen DC/DC-Wandler mit der Versorgungsgleichspannung betrieben werden. Dabei ist vorgesehen, dass eine Gleichspannungseinspeisung die Versorgungsgleichspannung von vorzugsweise UVDC = 400 VDC und der DC/DC-Wandler eine Steuergleichspannung USDC von vorzugsweise USDC = 24 VDC bereitstellt.

Die Aufgabe wird erfindungsgemäß durch eine Anordnung mit den Merkmalen des Anspruchs 5 gelöst. Dabei ist vorgesehen, dass die elektrischen Betriebsmittel des Luftkonditionierungsgerätes als Gleichspannungskomponenten ausgebildet und unmittelbar mit der zum Betrieb der wärmeerzeugenden Geräte erforderlichen Versorgungsgleichspannung der Gleichspannungseinspeisung verbunden sind.

Gegenüber dem Stand der Technik wird der Vorteil erreicht, dass auf zusätzliche Gleichspannungswandler, Gleichspannungs-Zwischenkreise und Umrichter verzichtet werden kann, was sowohl eine Kosten-, Energie- und Raumersparnis zur Folge hat.

Bei einer bevorzugten Ausführungsform sind die elektrischen Betriebsmittel in Form des zumindest einen Antriebs für den Ventilator des Verdampfers, den Ventilator des Kondensators und den Kompressor als Gleichstrommotor mit einer Nennspannung ausgebildet, die vorzugsweise der Nennspannung der Gleichspannungsversorgung entspricht. Die elektrischen Gleichspannungs-Betriebsmittel sind vorzugsweise jeweils über einen Sicherungsautomaten unmittelbar mit der Gleichspannungsversorgung verbunden.

Eine weitere bevorzugte Ausführungsform sieht vor, dass die elektrischen Betriebsmittel in Form der zumindest einen Steuer-/Regeleinheit, des zumindest einen Aktors wie Stellantriebs und/oder des zumindest einen Sensors wie Temperatursensor oder Drucksensor über einen DC/DC-Wandler mit der Gleichspannungsversorgung verbunden sind.

Vorzugsweise liefert die Gleichspannungsversorgung eine Versorgungsgleichspannung UVDC von UVDC = 400 V DC und der DC/DC-Wandler eine Steuergleichspannung USDC von USDC = 24 V DC.

Weitere Einzelheiten, Vorteile und Merkmale ergeben sich nicht nur aus den Ansprüchen, sondern auch aus der nachfolgenden Beschreibung eines der Zeichnung zu entnehmenden bevorzugten Ausführungsbeispiels.

Es zeigen:
- Fig. 1: eine schematische Seitenansicht einer Anordnung zum Betreiben von wärmeerzeugenden Geräten, umfassend die in einem Raum angeordneten wärmeerzeugenden Geräten sowie zumindest ein Luftkonditionierungsgerät, und
- Fig. 2: einen Schaltplan zur Verschaltung elektrischer Betriebsmittel des Luftkonditionierungsgerätes mit Gleichspannung.

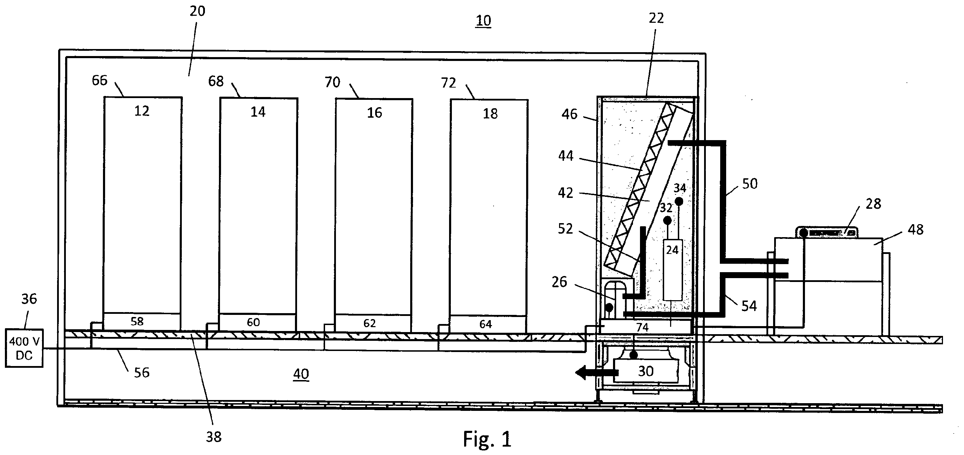

Fig. 1 zeigt rein schematisch eine Anordnung 10 zum Betrieb von wärmeerzeugenden Geräten 12, 14, 16, 18, insbesondere IT-Komponenten wie Server. Die Anordnung umfasst einen Raum 20, in dem die wärmeerzeugenden Geräte 12, 14, 16, 18 sowie zumindest ein Luftkonditionierungsgerät 22 zur Kühlung der wärmeerzeugenden Geräte 12, 14, 16, 18 angeordnet sind. Das Luftkonditionierungsgerät 22 umfasst als elektrische Betriebsmittel zumindest eine Steuer-/Regeleinheit 24, einen Kompressor 26, einen Ventilator 28 eines Kondensators, einen Ventilator 30 eines Verdampfers sowie einen Stellantrieb 32 und/oder zumindest einen Temperatursensor 34 oder Drucksensor.

Gemäß der Erfindung ist vorgesehen, dass die elektrischen Betriebsmittel 26, 28, 30 des Luftkonditionierungsgerätes 22 als Gleichspannungskomponenten ausgebildet und mit einer zum Betrieb der wärmeerzeugenden Geräte 12, 14, 16, 18 erforderlichen Gleichspannungseinspeisung 36 verbunden sind und von dieser unmittelbar, d. h. ohne Zwischenschaltung eines Wandlers mit Gleichspannung versorgt werden.

Der Raum 20 weist einen Boden 38 mit darunterliegendem Hohlraum 40 auf. In dem Hohlraum 40 ist der Ventilator 30 vorzugsweise in Form eines gehäuselosen RadialVentilators 30 des Luftkonditionierungsgerätes 20 angeordnet. Dieses umfasst des Weiteren eine Kühleinrichtung wie Wärmetauscher 42 mit vorgeordnetem Filter 44. Die Kühlanordnung ist in einem Gehäuse 46 angeordnet. Dabei wird das Gehäuse 46 auf dem Boden 38 aufgestellt und auf eine Öffnung des Bodens 38 ausgerichtet, um eine Verbindung mit dem Ventilator 30 zu ermöglichen.

Die Kühleinrichtung wie Wärmetauscher 42 ist mit einem außerhalb des Raums 20 angeordneten Kühlaggregat wie Kondensator 48 mit Ventilator 28 verbunden. Der Kondensator 48 ist über eine Leitung 50 mit dem Wärmetauscher 42 verbunden, der über eine Leitung 52 mit dem Verdichter 26 verbunden ist. Der Verdichter ist über eine Leitung 54 mit dem Kondensator 48 verbunden. Der Wärmetauscher 42, der Verdichter 26 und der Kondensator 48 bilden zusammen mit den Leitungen 50, 52, 54 einen Kühlkreislauf, durch den das zum Kühlen der Luft erforderliche Kühlfluid strömen kann. Insoweit wird jedoch auf hinlänglich bekannte Konstruktionen verwiesen, so dass es näherer Erläuterungen nicht bedarf.

Bei der hier beschriebenen Anlage zum Betrieb der wärmeerzeugenden Geräte 12, 14, 16, 18 wird die Versorgungsspannung durch die zentrale Gleichspannungseinspeisung 36 als Gleichspannung UVDC in einer Höhe von z.B. UVDC = 400 V DC bereitgestellt. Die Gleichspannungseinspeisung 36 ist über elektrische Leitungen 56 direkt mit Stromversorgungen 58, 60, 62, 64 der einzelnen Server 12, 14, 16, 18 verbunden, die in Gestellen wie Racks 66, 68, 70, 72 angeordnet sind.

Gemäß der Erfindung ist vorgesehen, dass vorzugsweise sämtliche elektrische Betriebsmittel des Luftkonditionierungsgerätes 22 mit Gleichspannung betrieben werden. Hierzu ist das Luftkonditionierungsgerät 22 über die elektrische Leitung 56 direkt mit der Gleichspannungseinspeisung 36 verbunden. Die elektrische Leitung 56 ist mit einer Stromverteilung 74 des Luftkonditionierungsgeräts 22 verbunden, von der aus die elektrischen Betriebsmittel wie Verdampfer-Ventilator 30, Kondensator-Ventilator 28, Kompressor 26 sowie Steuer-/Regeleinheit 24 mit Versorgungsgleichspannung, d.h. im vorliegenden Fall UVDC = 400 V DC versorgt werden.

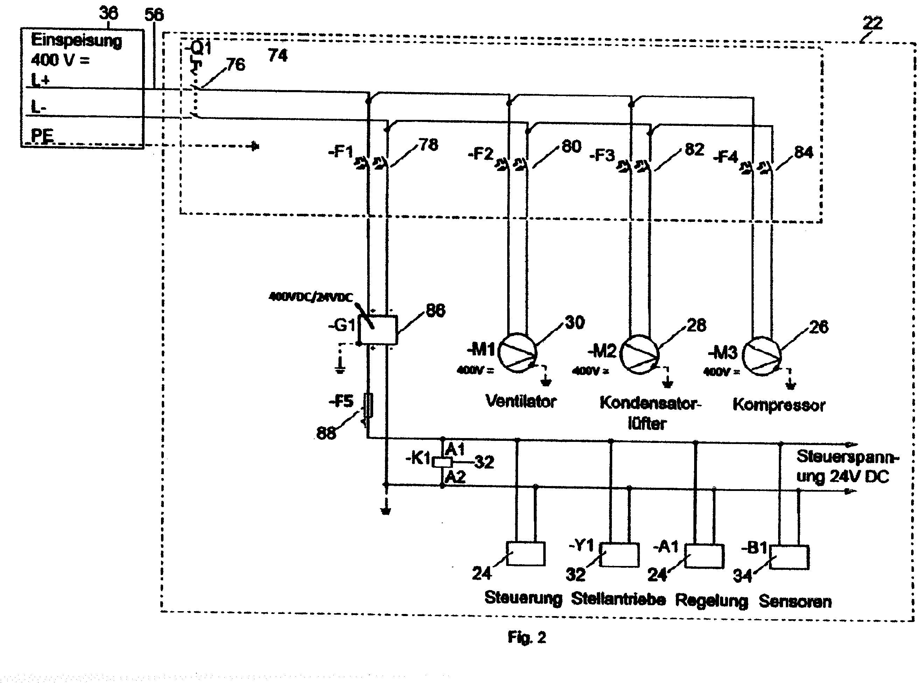

Fig. 2 zeigt rein schematisch einen Schaltplan zur Verschaltung der elektrischen Betriebsmittel 24, 26, 28, 30 mit der Gleichspannungseinspeisung 36. Die Stromverteilung 74 des Luftkonditionierungsgerätes 22 ist über die Energieversorgungsleitung 56 mit der Gleichspannungseinspeisung 36 verbunden. Die Stromverteilung 74 umfasst einen Hauptschalter 76, der eingangsseitig mit der Gleichspannungseinspeisung 36 und ausgangsseitig mit Sicherungsautomaten 78, 80, 82, 84 verbunden ist.

An den Sicherungsautomat 78 ist ein DC/DC-Wandler 86 angeschlossen, der eine Steuerspannung USDC mit USDC = 24 V DC für die elektrischen Niederspannungs-Betriebsmittel wie die Steuer-/Regeleinheit 24, Stellantriebe 32 und Sensoren 34 bereitstellt. Die Steuerspannung ist über ein Sicherungselement 88 abgesichert.

Der Verdampfer-Ventilator 30, der Kondensator-Ventilator 28 sowie der Kompressor 26 in Form eines Gleichspannungsmotors sind jeweils über einen der Sicherungsautomaten 80, 82 mit Versorgungsgleichspannung verbunden.

Die Anordnung 10 zeichnet sich gegenüber dem Stand der Technik dadurch aus, dass nur eine einzige Gleichspannungsversorgung für die gesamte Anordnung erforderlich ist. Dadurch können sowohl bei den Komponenten für die Energieversorgung als auch bei der Installation erhebliche Kosten eingespart werden.

## Patentansprüche

1. Verfahren zum Kühlen von in einem Raum (20) angeordneten und mit einer Versorgungsgleichspannung (UVDC) in Form einer Niederspannung von vorzugsweise 400 VDC versorgten wärmeerzeugenden Geräten (12, 14, 16, 18), insbesondere IT-Geräten, mittels eines Luftkonditionierungsgerätes (22), wobei das Luftkonditionierungsgerät (22) elektrische Betriebsmittel (24, 26, 28, 30), insbesondere in Form von zumindest einer Steuer-/Regeleinheit, zumindest einem Aktor wie Kompressor, Ventilator eines Kondensators, Ventilator eines Verdampfers oder Stellantrieb und/oder zumindest einem Sensor wie Temperatursensor umfasst,
**dadurch gekennzeichnet**
**dass** als elektrische Betriebsmittel (24, 26, 28, 30) des Luftkonditionierungsgerätes (22) Gleichspannungskomponenten verwendet werden, die unmittelbar mit derselben zum Betrieb der wärmeerzeugenden Geräte (14, 16, 18, 20) erforderlichen Versorgungsgleichspannung (UVDC) betrieben werden.

2. Verfahren nach Anspruch 1,
**dadurch gekennzeichnet,**
**dass** die elektrischen Betriebsmittel (26, 28, 30) des Luftkonditionierungsgerätes (22) in Form von Niederspannungskomponenten wie Gleichstrommotoren für den Ventilator des Verdampfers, den Ventilator des Kondensators und/oder den Kompressor unmittelbar mit der Versorgungsgleichspannung (UVDC) betrieben werden und/oder dass als Betriebsmittel solche verwendet werden, die eine Nennspannung aufweisen, die der Versorgungsgleichspannung (UVDC) entspricht.

3. Verfahren nach Anspruch 1 oder 2,
**dadurch gekennzeichnet,**
**dass** die elektrischen Betriebsmittel (24, 32, 34) in Form von Kleinspannungskomponenten wie die der zumindest einen Steuer-/ Regeleinheit, des zumindest einen Aktors wie Stellantrieb und/oder des zumindest einen Sensors wie Temperatursensor über einen DC/DC-Wandler (86) mit Gleichspannung betrieben werden.

4. Verfahren nach zumindest einem der vorhergehenden Ansprüche,
**dadurch gekennzeichnet**
**dass** eine Gleichspannungseinspeisung (36) die Versorgungsgleichspannung (UVDC) von vorzugsweise UVDC = 400 V DC und der DC/DC-Wandler (86) eine Steuergleichspannung (USDC) von vorzugsweise USDC = 24 V DC bereitstellt.

5. Anordnung (10), umfassend in einem Raum (20) angeordnete und mit einer Versorgungsgleichspannung (UVDC) einer Gleichspannungseinspeisung (36) verbundene wärmeerzeugende Geräte (12, 14, 16, 18), insbesondere IT-Geräte, sowie ein in dem Raum (20) angeordnetes Luftkonditionierungsgerät (22) zum Kühlen der wärmeerzeugenden Geräte (12, 14, 16, 18), wobei das Luftkonditionierungsgerät elektrische Betriebsmittel, insbesondere in Form von zumindest einer Steuer-/Regeleinheit (24), einem Aktor wie Kompressor, Ventilator eines Kondensators (28), Ventilator eines Verdampfers (30) oder Stellantrieb (32) und/oder zumindest einem Sensor (34) wie Temperatursensor des Luftkonditionierungsgerätes (22) umfasst,
**dadurch gekennzeichnet,**
**dass** die elektrischen Betriebsmittel (24, 26, 28, 30, 32, 34) des Luftkonditionierungsgerätes (22) als Gleichspannungskomponenten ausgebildet und unmittelbar mit derselben zum Betrieb der wärmeerzeugenden Geräte erforderlichen Versorgungsgleichspannung (UVDC) der Gleichspannungseinspeisung (36) verbunden sind.

6. Anordnung nach Anspruch 5,
**dadurch gekennzeichnet,**
**dass** die elektrischen Betriebsmittel (26, 28, 30) des Luftkonditionierungsgerätes (22) in Form von Antrieben für den zumindest einen Ventilator des Verdampfers, den Ventilator des Kondensators und/oder den Kompressor als Gleichstrommotor ausgebildet sind und/oder dass die Betriebsmittel eine Nennspannung aufweisen, die der Versorgungsgleichspannung (UVDC) entspricht.

7. Anordnung nach zumindest einem der vorhergehenden Ansprüche 5 und 6,
**dadurch gekennzeichnet,**
**dass** die elektrischen Betriebsmittel (24, 32, 34) in Form der zumindest einen Steuer-/ Regeleinheit, des zumindest einen Aktors wie Stellantriebs und/oder des zumindest einen Sensors wie Temperatursensors über einen DC/DC-Wandler (86) mit der Versorgungsgleichspannung (UVDC) verbunden sind.

8. Anordnung nach zumindest einem der vorhergehenden Ansprüche 5 bis 7,
**dadurch gekennzeichnet**
**dass** die Gleichspannungseinspeisung (36) die Versorgungsgleichspannung (UVDC) von UVDC = 400 V DC und der DC/DC-Wandler (86) eine Steuergleichspannung (USDC) von USDC = 24 V DC bereitstellt.

## Claims

1. Method for cooling heat-emitting devices (12, 14, 16, 18), in particular IT devices, arranged in a room (20) and supplied with a DC supply voltage (UVDC) in the form of a low voltage of preferably 400 VDC by means of an air-conditioning unit (22), said air-conditioning unit (22) comprising electrical operating means (24, 26, 28, 30), in particular in the form of at least one open-loop/closed-loop control unit, of at least one actuator such as a compressor, a fan of a condenser, a fan of a evaporator or an actuating drive, and/or of at least one sensor such as a temperature sensor,
wherein
DC voltage components directly operated with the same DC supply voltage (UVDC) required for operation of the heat-emitting devices (14, 16, 18, 20) are used as electrical operating means (24, 26, 28, 30) of the air-conditioning unit (22).

2. Method according to claim 1,
wherein
the electrical operating means (26, 28, 30) of the air-conditioning unit (22) in the form of low-voltage components such as DC motors for the fan of the evaporator, for the fan of the condenser and/or for the compressor are operated directly with the DC supply voltage (UVDC), and/or the operating means used are those having a nominal voltage corresponding to the DC supply voltage (UVDC).

3. Method according to claim 1 or 2,
wherein
the electrical operating means (24, 32, 34) in the form of low-voltage components such as those of the at least one open-loop/closed-loop control unit, of the at least one actuator such as an actuating drive and/or of the at least one sensor such as a temperature sensor are operated with DC voltage via a DC/DC converter (86).

4. Method according to at least one of the preceding claims,
wherein
a DC voltage supply (36) provides the DC supply voltage (UVDC) of preferably UVDC = 400 V DC and the DC/DC converter (86) a DC control voltage (USDC) of preferably USDC = 24 V DC.

5. Arrangement (10), comprising heat-emitting devices (12, 14, 16, 18), in particular IT devices, arranged in a room (20) and connected to a DC supply voltage (UVDC) of a DC voltage supply (36), and an air-conditioning unit (22) arranged in the room (20) for cooling the heat-emitting devices (12, 14, 16, 18), said air-conditioning unit comprising electrical operating means, in particular in the form of at least one open-loop/closed-loop control unit (24), of an actuator such as a compressor, a fan of a condenser (28), a fan of a evaporator (30) or an actuating drive (32), and/or of at least one sensor (34) such as a temperature sensor of the air-conditioning unit (22),
wh erein
the electrical operating means (24, 26, 28, 30, 32, 34) of the air-conditioning unit (22) are designed as DC voltage components and are directly connected to the same DC supply voltage (UVDC) of the DC voltage supply (36) required for operation of the heat-emitting devices.

6. Arrangement according to claim 5,
wherein
the electrical operating means (26, 28, 30) of the air-conditioning unit (22) in the form of drives for the at least one fan of the evaporator, for the fan of the condenser and/or for the compressor are designed as a DC motor, and/or the operating means have a nominal voltage corresponding to the DC supply voltage (UVDC).

7. Arrangement according to at least one of the preceding claims 5 and 6,
wherein
the electrical operating means (24, 32, 34) in the form of the at least one open-loop/closed-loop control unit, of the at least one actuator such as an actuating drive and/or of the at least one sensor such as a temperature sensor are connected to the DC supply voltage (UVDC) via a DC/DC converter (86).

8. Arrangement according to at least one of the preceding claims 5 to 7,
wherein
the DC voltage supply (36) provides the DC supply voltage (UVDC) of UVDC = 400 V DC and the DC/DC converter (86) a DC control voltage of USDC = 24 V DC.

## Revendications

1. Procédé destiné à réfrigérer des éléments émettant de la chaleur (12, 14, 16, 18), notamment des appareils informatiques, disposés dans un local (20) et alimentés en tension continue d'alimentation (UVDC) sous forme d'une basse tension qui est de préférence de 400 VCC, au moyen d'un dispositif de conditionnement d'air (22), sachant que le dispositif de conditionnement d'air (22) comprend des équipements électriques (24, 26, 28, 30), notamment sous forme d'au moins une unité de commande/régulation, d'au moins un actionneur tel qu'un compresseur, ventilateur d'un condensateur, ventilateur d'un évaporateur ou servomoteur et/ou au moins d'un capteur tel qu'un capteur de température,
**caractérisé en ce**
**que** sont utilisés comme équipements électriques (24, 26, 28, 30) du dispositif de conditionnement d'air (22) des composants à courant continu qui sont exploités directement avec la même tension continue d'alimentation (UVDC) que celle requise pour l'exploitation des éléments émettant de la chaleur (14, 16, 18, 20).

2. Procédé selon la revendication 1,
**caractérisé en ce**
**que** les équipements électriques (26, 28, 30) du dispositif de conditionnement d'air (22) sous forme de composants à basse tension, tels que des moteurs électriques à courant continu pour le ventilateur de l'évaporateur, le ventilateur du condensateur et/ou le compresseur, sont exploités directement avec la tension continue d'alimentation (UVDC) et/ou que sont utilisés comme équipements des appareils qui présentent une tension nominale correspondant à la tension continue d'alimentation (UVDC).

3. Procédé selon la revendication 1 ou 2,
**caractérisé en ce**
**que** les équipements électriques (24, 32, 34) sous forme de composants à très basse tension comme ceux de ladite au moins une unité de commande/régulation, dudit au moins un actionneur tel qu'un servomoteur et/ou dudit au moins un capteur tel qu'un capteur de température sont exploités avec une tension continue par le biais d'un convertisseur CC/CC (86).

4. Procédé selon au moins une des revendications précédentes,
**caractérisé en ce**
**qu'**une alimentation en tension continue (36) fournit la tension continue d'alimentation (UVDC) telle que de préférence UVDC = 400 VCC et que le convertisseur CC/CC (86) fournit une tension continue de commande (USDC) telle que de préférence USDC = 24 VCC.

5. Arrangement (10), comprenant des éléments émettant de la chaleur (12, 14, 16, 18), notamment des appareils informatiques, disposés dans un local (20) et reliés à une tension continue d'alimentation (UVDC) d'une alimentation en tension continue (36), ainsi qu'un dispositif de conditionnement d'air (22) disposé dans le local (20) et destiné à réfrigérer les appareils émettant de la chaleur (12, 14, 16, 18), sachant que le dispositif de conditionnement d'air comprend des équipements électriques, notamment sous forme d'au moins une unité de commande/régulation (24), d'au moins un actionneur tel qu'un compresseur, ventilateur d'un condensateur (28), ventilateur d'un évaporateur (30) ou servomoteur (32) et/ou d'au moins un capteur (34) tel qu'un capteur de température du dispositif de conditionnement (22),
**caractérisé en ce**
**que** les équipements électriques (24, 26, 28, 30, 32, 34) du dispositif de conditionnement d'air (22) sont conçus sous forme de composants à tension continue et sont reliés directement à la même tension continue d'alimentation (UVDC) de l'alimentation en tension continue (36), requise pour l'exploitation des éléments émettant de la chaleur.

6. Procédé selon la revendication 5,
**caractérisé en ce**
**que** les équipements électriques (26, 28, 30) du dispositif de conditionnement d'air (22) sous forme d'entraînements pour ledit au moins un ventilateur de l'évaporateur, le ventilateur du condensateur et/ou le compresseur sont conçus sous forme de moteur électrique à courant continu et/ou que les équipements présentent une tension nominale correspondant à la tension continue d'alimentation (UVDC).

7. Arrangement selon au moins une des revendications précédentes 5 et 6,
**caractérisé en ce**
**que** les équipements électriques (24, 32, 34) sous forme de ladite au moins une unité de commande/régulation, dudit au moins un actionneur tel qu'un servomoteur et/ou dudit au moins un capteur tel qu'un capteur de température sont reliés à la tension continue d'alimentation (UVDC) par le biais d'un convertisseur CC/CC (86).

8. Arrangement selon au moins une des revendications précédentes 5 à 7,
**caractérisé en ce**
**que** l'alimentation en tension continue (36) fournit la tension continue d'alimentation (UVDC) telle que UVDC = 400 VCC et que le convertisseur CC/CC (86) fournit une tension continue de commande telle que USDC = 24 VCC.
